# DEMANDE DE BREVET EUROPEEN

(11) **EP 1 974 977 A1**
(43) Date de publication de la demande: **01.10.2008**
(21) Numéro de dépôt: 08153477.8
(22) Date de dépôt: 27.03.2008
(51) Int. Cl.: B60K 15/04

(54) **Dispositif pour éviter les erreurs d'alimentation en fluide d'une réserve**

(30) Priorité: 31.03.2007 FR 0754197; 09.10.2007 FR 0758177; 18.03.2008 FR 0851755
(71) Demandeur: G. Cartier Technologies, 74302 Cluses (FR)
(72) Inventeur: Breheret, Jean-Luc, 74440, MIEUSSY (FR); Nourdine, Amir, 74300, CLUSES (FR)
(74) Mandataire: Poncet, Jean-François

(57) **Abrégé**

Dispositif pour éviter les erreurs d'alimentation en fluide, comprenant une bobine primaire (6), placée dans une réserve (1) à proximité d'un orifice d'alimentation en fluide (2) de la réserve, un circuit électrique de commande et de mesure (7) alimentant la bobine primaire (6) pour générer des ondes électromagnétiques dans l'orifice d'alimentation en fluide (2), des moyens de détection (7, 8), sensibles à la forme d'onde des courants ou tensions qui apparaissent dans la bobine primaire (6), et qui permettent de distinguer, en fonction de ladite forme d'onde des courants ou tensions dans la bobine primaire (6), la présence et le type de pistolet d'alimentation en fluide (4). Des moyens de comparaison (11) permettent de déterminer si la fréquence d'oscillation mesurée (fₘ) est différente d'une fréquence d'oscillation de référence (fᵣ). Le cas échéant, l'utilisateur est averti, par des moyens d'alerte (12), lui indiquant qu'il s'apprête à remplir sa réserve (1) avec un mauvais type de fluide.

## Description

La présente invention concerne les dispositifs de contrôle d'alimentation pour éviter les erreurs d'alimentation en fluide dans une réserve de fluide.

L'invention s'applique notamment, mais non exclusivement, à l'alimentation des véhicules en carburant.

Les véhicules actuels utilisent principalement deux types de carburant, l'essence et le gasoil.

Chaque utilisateur de véhicule doit régulièrement remplir le réservoir de carburant de son véhicule avec le type de carburant adéquat, c'est-à-dire avec de l'essence pour un véhicule dont le moteur fonctionne à l'essence, ou avec du gasoil pour un véhicule à moteur diesel.

Le remplissage du réservoir est effectué au moyen d'un pistolet d'alimentation en carburant relié à une borne de distribution de carburants par une conduite flexible. Chaque pistolet d'alimentation en carburant comprend une poignée à levier de commande, prolongée par un tube de pénétration métallique destiné à pénétrer dans l'orifice d'entrée du réservoir du véhicule pour y introduire le carburant.

Il arrive qu'un utilisateur se trompe de type de carburant pour alimenter son véhicule. En effet, l'erreur est aisée, notamment parce qu'il y a habituellement sur chaque borne de distribution de carburants plusieurs pistolets de distribution pour des carburants différents, et les pistolets se ressemblent les uns et les autres.

Le problème est que les nouvelles générations de moteurs à injection directe (essence ou diesel) supportent mal les erreurs d'alimentation en carburant. Le problème est aussi que les moteurs prévus pour une alimentation par de l'essence sans plomb, et surtout les pots catalytiques qui leurs sont associés, ne supportent pas les alimentations en gasoil ou en essence ordinaire.

Un premier moyen simple pour éviter les erreurs d'alimentation a été de concevoir des pistolets d'alimentation en essence dont les tubes de pénétration ont des diamètres plus petits que ceux des tubes d'alimentation en gasoil.

Ainsi, les pistolets d'alimentation en essence ont un tube qui présente un diamètre extérieur normé de 21 mm et un diamètre intérieur de 16,8 mm, tandis que les pistolets d'alimentation en gasoil ont un tube qui présente un diamètre extérieur normé de 24,6 mm et un diamètre intérieur de 19,8 mm.

Tenant compte de cette différence entre les diamètres extérieurs des deux types de tubes de pistolets d'alimentation, les constructeurs automobiles ont proposé d'adapter en conséquence les diamètres des orifices d'alimentation en carburant, en rapportant comme décrit par exemple dans les documents DE 196 39 825 et DE 3641274, à l'extrémité d'une conduite d'alimentation, une buse de guidage dont le diamètre intérieur est peu supérieur au diamètre du tube de pénétration du pistolet d'alimentation approprié. Ainsi, le diamètre intérieur de la buse de guidage d'un véhicule essence est plus petit que celui de la buse de guidage d'un véhicule diesel et interdit toute introduction d'un tube de pénétration pour gasoil.

Les dimensions empêchent ainsi un utilisateur d'introduire un pistolet d'alimentation en gasoil dans l'orifice d'alimentation à buse de guidage d'un véhicule à essence.

Toutefois, un utilisateur inattentif pourra sans difficulté introduire un pistolet d'alimentation en essence dans l'orifice d'alimentation d'un véhicule diesel.

Ainsi, ce premier moyen simple pour éviter les erreurs d'alimentation en carburant n'écarte qu'une partie des risques, et ne présente donc pas une fiabilité satisfaisante.

Les mêmes difficultés peuvent se produire dans les dispositifs d'alimentation de diverses réserves avec des fluides spécifiques, lorsqu'on utilise des pistolets d'alimentation en fluide ayant des structures différentes pour distribuer des fluides spécifiques différents.

Plus récemment, on a proposé des buses de guidage munies d'un moyen de verrouillage mécanique apte à interdire l'introduction d'un tube de pénétration de pistolet d'alimentation à essence de diamètre plus petit, tout en autorisant l'introduction d'un tube de pénétration de pistolet d'alimentation en gasoil. On peut trouver une description de ces systèmes par exemple dans les documents EP 1 199 208, DE 101 57 090, EP 1 264 726, et US 6,382,270.

Dans tous les cas, des moyens mécaniques viennent palper l'extrémité du tube de pénétration du pistolet d'alimentation, pour en apprécier le diamètre et interdire ou autoriser son introduction dans la buse de guidage.

Ces systèmes de contrôle mécaniques présentent toutefois des inconvénients graves, qui rendent leur utilisation inappropriée.

Notamment, les moyens mécaniques pour palper le diamètre du tube de pénétration du pistolet d'alimentation subissent nécessairement le contact du tube de pénétration et peuvent donc facilement être endommagés par des chocs mécaniques. L'endommagement des moyens mécaniques risque alors de bloquer totalement les possibilités d'accès au réservoir, et d'immobiliser alors le véhicule.

Ensuite, les moyens mécaniques décrits ne permettent pas de laisser la possibilité à l'utilisateur de remplir le réservoir avec un moyen non normalisé tel qu'un bidon, une bouteille.

Egalement, après endommagement par des chocs ou efforts mécaniques, les moyens mécaniques ne permettent pas de détecter et de différencier de manière fiable des tubes de pénétration de pistolets d'alimentation dont les diamètres sont relativement proches les uns des autres, tels que par exemple les tubes de pénétration des pistolets d'alimentation en essence ou en gasoil.

Par ailleurs, les documents US 5,857,501 et WO 99/58356 proposent des solutions électroniques à bobines embarquées sur les véhicules et à bobines et circuits d'alimentation électrique et de traitement intégrés aux bornes et pistolets d'alimentation. Il est alors nécessaire de modifier encore les bornes et pistolets d'alimentation en fluide, pour intégrer les bobines et circuits d'alimentation électrique et de traitement.

Le problème proposé par la présente invention est de concevoir un dispositif de contrôle d'alimentation simple, qui ne nécessite pas de modification structurelle des bornes de distribution de fluides et des pistolets d'alimentation en fluide, et qui permette la détection automatique fiable du type de fluide qu'un utilisateur s'apprête à introduire dans la réserve.

Selon un autre aspect, l'invention vise à concevoir une réserve "intelligente" qui avertit l'utilisateur lorsque ce dernier s'apprête à introduire un mauvais type de fluide dans la réserve, et/ou qui interdit la pénétration physique du tube de pénétration d'une source d'alimentation en fluide inapproprié, et/ou qui interdit l'écoulement d'un fluide inapproprié vers la réserve.

Pour atteindre ces buts ainsi que d'autres, l'invention propose un dispositif de contrôle d'alimentation pour éviter les erreurs dans le choix du fluide lorsqu'on alimente en fluide une réserve à l'aide d'un pistolet d'alimentation en fluide, le pistolet ayant un tube de pénétration que l'on introduit dans un orifice d'alimentation en fluide de la réserve, la structure du tube de pénétration étant spécifique en fonction du fluide délivré ; un tel dispositif de contrôle d'alimentation comprend :
- une bobine primaire, fixée à la réserve à proximité de l'orifice d'alimentation en fluide pour être traversée par le tube de pénétration du pistolet d'alimentation en fluide lors de son introduction dans l'orifice d'alimentation en fluide,
- un circuit électrique de commande et de mesure apte à alimenter la bobine primaire de manière à générer des ondes électromagnétiques dans l'espace intérieur de la bobine primaire,
- des moyens de détection, sensibles à la forme d'onde des courants ou tensions qui apparaissent dans la bobine primaire, et qui permettent de distinguer, en fonction de ladite forme d'onde des courants ou tensions dans la bobine primaire, la présence et le type de pistolet d'alimentation en fluide.

Ce dispositif est simple et ne nécessite pas, pour son implantation, de modification dans la structure des pistolets d'alimentation en fluide, ni une modification d'aucun autre élément des bornes de distribution de fluides. Il nécessite simplement d'être adapté au niveau de l'orifice d'entrée de la réserve de fluide.

Du fait que cette modification concerne seulement une zone située à proximité d'un orifice d'alimentation en fluide de la réserve, zone aisément accessible, cela rend possible l'utilisation du dispositif de l'invention aussi bien sur les réserves neuves que sur les réserves anciennes.

De plus, les constructeurs automobiles peuvent implanter le dispositif de l'invention dans les buses de guidage, par une simple adaptation des lignes de production des véhicules déjà utilisées, sans recommencer leur conception.

Le dispositif de contrôle d'alimentation ainsi défini permet de différencier de manière fiable les principaux tubes de pénétration des pistolets d'alimentation en carburant actuellement utilisés sur les véhicules terrestres à moteur thermique, en particulier les tubes de pénétration des pistolets d'alimentation en gasoil et des pistolets d'alimentation en essence.

En outre, le dispositif de contrôle d'alimentation ne nécessite aucun contact mécanique avec le tube de pénétration du pistolet d'alimentation. Il en résulte une absence du risque de détérioration du dispositif de détection par d'éventuels chocs mécaniques lors des manipulations brusques et inévitables des pistolets d'alimentation en carburant.

Le dispositif peut avantageusement comprendre un condensateur connecté en parallèle avec la bobine primaire, l'ensemble étant connecté en série avec un commutateur d'excitation pour être alimenté par un générateur de tension continue.

Le circuit ainsi constitué est un circuit résonant RLC. De façon connue, le circuit a pour fréquence de résonance fᵣ = (L₁C)-^{½}, L₁ étant l'inductance apparente de la bobine primaire, C étant la capacité du condensateur.

Lorsque le commutateur d'excitation est fermé, le condensateur se charge à la tension du générateur de tension continue. A l'ouverture du commutateur d'excitation, le circuit résonant oscille à la fréquence de résonance fᵣ, et l'amplitude de cette oscillation décroît exponentiellement au fil du temps à cause de la résistance propre R du circuit.

Le tube de pénétration métallique d'un pistolet d'alimentation en fluide, placé dans l'orifice d'alimentation en fluide de la réserve, à proximité de la bobine primaire, constitue un circuit électrique secondaire inductif et résistif. Sa présence modifie l'inductance vue du circuit électrique primaire, et modifie donc la fréquence de résonance fᵣ. Son diamètre modifie aussi l'inductance, et la fréquence de résonance fᵣ.

En effet, lorsque le tube de pénétration du pistolet d'alimentation en carburant est introduit dans le réservoir de carburant par l'orifice d'alimentation en carburant, des courants induits se créent dans le tube de pénétration du pistolet d'alimentation en carburant sous l'effet de l'induction magnétique créée par le courant oscillant parcourant la bobine primaire. Ces courants induits créent un champ magnétique parasite qui influence la bobine primaire. Ceci a pour conséquence de faire varier l'inductance équivalente du circuit primaire. La fréquence d'oscillation du circuit électrique primaire devient alors fₘ = (L'*C)^{-1/2}, L' étant l'inductance équivalente de la bobine primaire influencée par le tube de pénétration du pistolet d'alimentation en carburant. Cette fréquence d'oscillation fₘ peut être mesurée par des moyens de mesure de fréquence d'oscillation.

Les essais, effectués notamment sur des dispositifs d'alimentation des véhicules diesel et essence, ont montré que les tubes de pénétration ont des structures suffisamment différentes pour induire des modifications détectables dans la fréquence de résonance, permettant de différencier de manière certaine les types de pistolet d'alimentation en carburant. C'est pourquoi la mesure de fréquence est un choix judicieux, simple et efficace.

Rappelons que, de façon classique, les tubes de pénétration des pistolets d'alimentation en carburant sont en métal, ce qui explique leur action sur la fréquence de résonance fᵣ.

Le moyen de détection choisi pour déterminer le type de pistolet d'alimentation en fluide est donc de mesurer, par le circuit électrique de commande et de mesure, l'influence du circuit secondaire constitué par le tube de pénétration du pistolet d'alimentation en fluide.

Le circuit électrique de commande et de mesure peut avantageusement comprendre une résistance négative connectée en série avec la bobine primaire aux bornes du condensateur.

Ainsi placée, la résistance négative réduit l'amortissement inévitable du circuit résonant RLC. L'oscillation du circuit résonant demeure ainsi présente plus longtemps, et permet une mesure plus précise de la fréquence fᵣ.

Avantageusement, le circuit de commande et de mesure est apte à mesurer la fréquence d'oscillation de la tension aux bornes de la bobine primaire après l'ouverture du commutateur d'excitation, pour produire un signal de fréquence mesurée fₘ. On réduit ainsi l'influence de l'impédance propre du circuit d'alimentation sur la fréquence fᵣ, augmentant par conséquent l'influence de la résistance du seul tube de pénétration du pistolet à différencier. La détection est ainsi facilitée.

Pour chaque type de pistolet d'alimentation en fluide, on peut imaginer avoir conservé en mémoire dans le circuit électrique une valeur de fréquence de référence fᵣ, correspondant à la fréquence d'oscillation du circuit résonant influencé par le circuit secondaire adéquat (pistolet à essence pour véhicule essence, pistolet gasoil pour véhicule diesel, pistolet approprié pour le fluide désiré).

Ainsi, de préférence, les moyens de détection peuvent comprendre :
- des moyens de comparaison pour recevoir le signal de fréquence mesurée et pour comparer ce signal de fréquence mesurée avec un signal de fréquence de référence propre au type de pistolet d'alimentation en fluide adapté à l'alimentation du fluide qui convient à la réserve, et pour produire un signal d'erreur en cas de différence sensible entre le signal de fréquence mesurée et le signal de fréquence de référence,
- des moyens d'alerte pour attirer l'attention de l'utilisateur en cas de présence d'un signal d'erreur.

Le dispositif de l'invention peut comprendre des moyens simples de détection d'une différence entre la fréquence de référence fᵣ et la fréquence mesurée fₘ. Imaginons que fₘ soit différente de fᵣ, l'utilisateur va être prévenu qu'il a introduit un mauvais pistolet d'alimentation en fluide dans l'orifice du réservoir de fluide. Cela aura pour effet de permettre à l'utilisateur de retirer le pistolet d'alimentation en fluide avant toute alimentation significative de la réserve avec le mauvais type de fluide.

De façon avantageuse, les moyens d'alerte peuvent émettre un signal sonore ou lumineux perceptible par l'utilisateur.

L'utilisateur n'aura ainsi pas à se déplacer pour être averti de son erreur présente.

Selon l'invention, le dispositif peut comprendre un contacteur d'entrée, connecté en série dans l'alimentation du circuit électrique primaire, et apte à commuter pour alimenter le dispositif en fonction de la position d'un organe externe tel qu'une trappe d'accès à l'orifice d'alimentation en fluide.

Lorsque l'on veut alimenter une réserve telle qu'un réservoir de véhicule, la première action est d'ouvrir la trappe de la réserve (du réservoir en carburant). Le circuit électrique primaire est alors alimenté par le générateur de tension continue (tel que la batterie du véhicule). Une fois la trappe fermée, l'alimentation est interrompue et on évite ainsi de décharger la batterie.

De la sorte, le fonctionnement n'est autorisé qu'aux moments opportuns d'alimentation de la réserve en fluide (trappe ouverte seulement).

En pratique, on peut utiliser, par exemple, un contacteur d'entrée de type ampoule REED.

Selon un autre mode de réalisation, le dispositif de contrôle d'alimentation tel que défini ci-dessous comprend un dispositif de verrouillage, positionné en aval de la bobine primaire, et apte à s'opposer sélectivement à la progression du tube de pénétration vers la réserve et/ou à l'écoulement du fluide vers la réserve. L'action du dispositif est alors positive, et son efficacité ne dépend plus de la bonne volonté de l'utilisateur.

En pratique, le dispositif de verrouillage peut comprendre :
- un clapet d'obturation conçu pour prendre sélectivement un état d'obturation dans lequel il obture l'accès à la réserve, et un état de libération,
- un actionneur de verrouillage piloté par le circuit électrique de commande et de mesure, et sollicité par un moyen de rappel, l'actionneur de verrouillage pouvant prendre un état verrouillé et un état non verrouillé,
- l'actionneur de verrouillage assurant le maintien du clapet d'obturation à l'état d'obturation lorsqu'il est lui-même à l'état verrouillé, et autorisant le clapet d'obturation à prendre l'état de libération lorsqu'il est lui-même à l'état non verrouillé.

Selon un autre aspect, l'invention prévoit un véhicule pouvant comprendre, au niveau de l'orifice d'entrée de son réservoir de carburant, un dispositif tel que défini ci-dessus.

Ainsi, le véhicule selon l'invention sera "protégé" d'une erreur éventuelle d'alimentation en carburant de la part de l'utilisateur.

De façon avantageuse, l'orifice d'entrée du réservoir de carburant du véhicule peut comprendre une buse de guidage pour guider la course du tube de pénétration du pistolet d'alimentation en carburant.

La buse de guidage garantit de façon assez précise la position du tube de pénétration du pistolet d'alimentation en carburant par rapport à la bobine primaire. Cette position détermine le couplage entre le circuit électrique secondaire (tube de pénétration) et le circuit électrique primaire (circuit résonant). Cela permet de rendre encore plus précise la détection du type de pistolet d'alimentation en carburant.

Selon un premier mode de réalisation, convenant pour une application de l'invention à des véhicules neufs, la buse de guidage comprend :
- un corps de buse annulaire, raccordé de façon étanche selon une zone de raccordement annulaire en bout d'une conduite d'alimentation du réservoir, et conformé pour recevoir et guider le tube de pénétration du pistolet d'alimentation en carburant,
- un tube de guidage, prolongeant coaxialement le corps de buse dans la conduite d'alimentation du réservoir, et également conformé pour recevoir et guider le tube de pénétration du pistolet d'alimentation en carburant,
- des moyens d'étanchéité entre le corps de buse et la carrosserie adjacente du véhicule.

De préférence, la bobine primaire est orientée coaxialement et surmoulée par une matière plastique dans ou sur la paroi du tube de guidage, et est alimentée depuis le circuit électrique de commande et de mesure par des conducteurs électriques noyés dans la matière plastique dans ou sur la paroi du tube de guidage et qui sortent radialement de la buse de guidage dans son tronçon situé entre la zone de raccordement annulaire et les moyens d'étanchéité.

Selon l'invention, on peut aussi prévoir des moyens pour détecter la présence et l'absence d'un bouchon obturant l'orifice d'alimentation. Pour cela, un condensateur est connecté en parallèle avec la bobine primaire, l'ensemble étant connecté en série avec un commutateur d'excitation pour être alimenté par un générateur de tension continue ; le condensateur est lui-même connecté en série avec un commutateur de test; un circuit résonant secondaire est prévu dans un bouchon d'obturation de l'orifice d'alimentation ; et le circuit de commande et de mesure contient une séquence de contrôle de présence de bouchon au cours de laquelle le commutateur de test est ouvert, et le circuit de commande et de mesure commande la fermeture puis l'ouverture du commutateur d'excitation puis la réception et l'analyse du signal de tension au point de mesure et la génération d'un signal de présence de bouchon en cas de réception d'un signal oscillant, et la génération d'un signal d'absence de bouchon en cas de réception d'un signal non oscillant.

Selon un second mode de réalisation, convenant pour une application de l'invention à des véhicules finis, dans lesquels la buse de guidage est déjà solidaire du tube d'alimentation et ne peut plus être extraite sans dégradation, la bobine primaire est orientée coaxialement et engagée à l'intérieur du tube de guidage tout en laissant un espace suffisant pour le passage du tube de pénétration du pistolet d'alimentation en carburant, et la bobine primaire est alimentée depuis le circuit électrique de commande et de mesure par l'intermédiaire d'une bobine réceptrice, connectée en série avec la bobine primaire, logée en orientation radiale également à l'intérieur du tube de guidage, et couplée magnétiquement à une bobine émettrice connectée au circuit électrique de commande et de mesure et logée à l'extérieur de la conduite d'alimentation en matière plastique, la bobine primaire et la bobine réceptrice formant un ensemble tubulaire noyé dans une matière plastique.

D'autres objets, caractéristiques et avantages de la présente invention ressortiront de la description suivante de modes de réalisation particuliers, faite en relation avec les figures jointes, parmi lesquelles :
- la figure 1 est une vue globale de principe du dispositif de contrôle d'alimentation selon l'invention, dans un mode de réalisation particulier ;
- la figure 2 est un schéma électrique équivalent du dispositif de la figure 1 ;
- la figure 3 représente la forme d'onde du courant ou de la tension à fréquence d'oscillation fₘ dans le circuit primaire de la figure 1 ;
- la figure 4 est un schéma électrique équivalent du dispositif de la figure 1 selon un second mode de réalisation ;
- la figure 5 est un schéma de principe du dispositif de contrôle d'alimentation selon un mode de réalisation à moyens de coupure d'alimentation ;
- la figure 6 est une vue globale de principe du dispositif de contrôle d'alimentation selon un second mode de réalisation de l'invention, à couplage inductif ;
- la figure 7 est un schéma électrique équivalent du dispositif de la figure 6 ;
- la figure 8 est une vue globale de principe d'un dispositif selon un troisième mode de réalisation, avec détection de bouchon ;
- la figure 9 est un schéma électrique équivalent du dispositif de la figure 8 ;
- la figure 10 est une vue globale de principe d'un dispositif selon un quatrième mode de réalisation, avec dispositif de verrouillage et clapet d'obturation, en position d'attente déverrouillée ;
- la figure 11 représente une variante du dispositif de la figure 10, avec un moyen de déverrouillage de secours ;
- la figure 12 est une vue schématique de côté agrandie, montrant une structure possible d'un moyen de déverrouillage de secours ;
- la figure 13 illustre en vue de face le moyen de déverrouillage de secours selon la figure 12 ;
- la figure 14 illustre le dispositif de la figure 10, lorsque le pistolet est en cour d'identification ou lorsque l'accès a été refusé ;
- la figure 15 illustre le dispositif de la figure 10 lorsque l'accès a été autorisé ;
- la figure 16 illustre le dispositif de la figure 10, lorsque l'accès a été autorisé et après pénétration du pistolet pour le remplissage ;
- la figure 17 illustre une variante du dispositif de la figure 10, dans laquelle le verrouillage est produit par un aimant coulissant ; et
- la figure 18 illustre un autre mode de réalisation comprenant des moyens pour fiabiliser l'identification du pistolet.

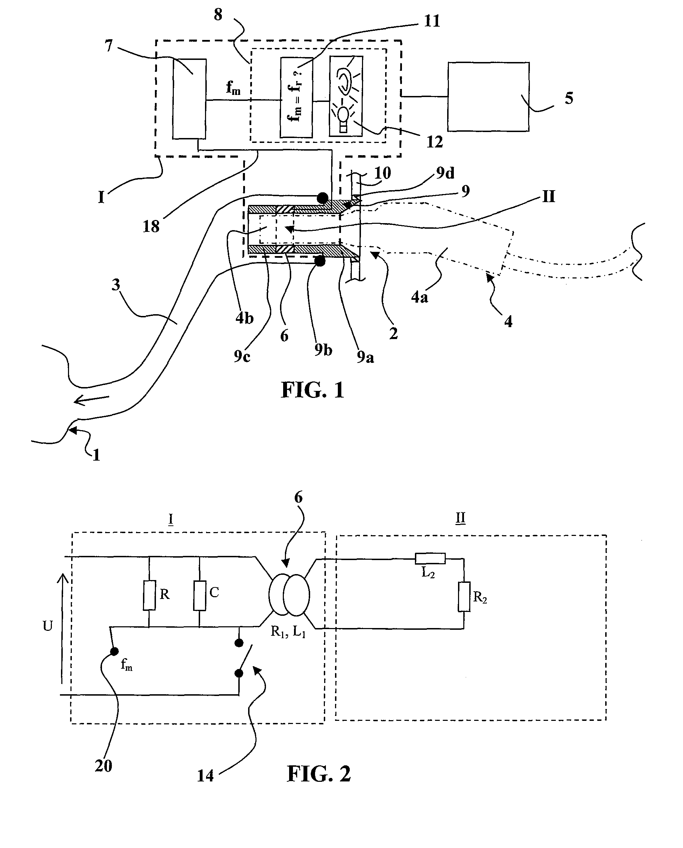

La figure 1 représente les éléments constitutifs essentiels d'un dispositif de contrôle d'alimentation selon un mode de réalisation de l'invention.

Une réserve 1, par exemple le réservoir d'un véhicule, est une cavité adaptée pour contenir un fluide tel que le carburant qui alimente le moteur du véhicule. Cette réserve 1 comprend un orifice d'alimentation 2 et une conduite d'alimentation 3 qui relie l'orifice d'alimentation 2 au corps principal de la réserve 1.

Un pistolet d'alimentation en fluide 4 comprend une poignée 4a à levier de manoeuvre et un tube de pénétration 4b métallique adapté pour être introduit par l'utilisateur dans l'orifice d'alimentation 2 de la réserve 1.

Au voisinage de l'orifice d'alimentation 2, on prévoit un circuit primaire I alimenté par un générateur de tension 5. Ce circuit primaire I comprend une bobine primaire 6 à condensateur parallèle, formant un circuit résonant, un circuit électrique de commande et de mesure 7, des moyens de détection 8. La bobine primaire 6 peut être un enroulement hélicoïdal de conducteur électrique, placé en position coaxiale dans la conduite d'alimentation 3. Le condensateur parallèle peut être intégré à la bobine, afin de réduire la résistance propre du circuit résonant. En alternative, notamment si le système doit être re-calibré, le condensateur parallèle peut être déporté dans le circuit électrique de commande et de mesure 7.

Notamment dans le cas d'une réserve de type réservoir de véhicule, l'orifice d'alimentation 2 est formé dans une buse de guidage 9 rapportée à l'entrée de la conduite d'alimentation 3. La buse de guidage 9 comprend un corps de buse annulaire 9a raccordé de façon étanche selon une zone de raccordement annulaire 9b en bout de la conduite d'alimentation 3, et comprend un tube de guidage 9c qui prolonge coaxialement le corps de buse 9a dans la conduite d'alimentation 3.

Le corps de buse annulaire 9a et le tube de guidage 9c sont tous deux conformés pour recevoir et guider le tube de pénétration 4b du pistolet d'alimentation en fluide 4.

Des moyens d'étanchéité 9d tels qu'un joint annulaire sont prévus pour assurer l'étanchéité entre la face latérale du corps de buse 9a et la carrosserie 10 du véhicule.

Dans le mode de réalisation illustré sur la figure 1, la bobine primaire 6 est orientée coaxialement et surmoulée dans la paroi du tube de guidage 4b.

La bobine primaire 6 est alimentée depuis le circuit électrique de commande et de mesure 7 par des conducteurs électriques 18 noyés dans la paroi du tube de guidage 4b et qui sortent radialement de la buse de guidage 9 dans son tronçon situé entre la zone de raccordement annulaire 9b et les moyens d'étanchéité 9d. De la sorte, on évite toute présence de conducteurs électriques en contact avec l'atmosphère intérieure de la conduite d'alimentation 3 ou de la réserve 1.

Les moyens de détection 8 comprennent des moyens de comparaison 11, des moyens d'alerte 12. Les moyens d'alerte 12 peuvent émettre un signal sonore ou lumineux perceptible par un utilisateur. Le signal peut être perceptible au voisinage de la réserve 1. En alternative, il peut être perceptible depuis une position déportée, par exemple sur le tableau de bord d'un véhicule.

Lorsque le tube de pistolet d'alimentation en carburant 4 est correctement positionné dans l'orifice d'alimentation 2, il traverse la bobine primaire 6. On provoque alors l'oscillation d'un circuit résonant constitué par la bobine primaire 6 et un condensateur parallèle.

Le circuit électrique de commande et de mesure 7 détermine la fréquence fₘ mesurée d'oscillation du circuit de la bobine primaire 6.

Les moyens de comparaison 11 comparent la fréquence d'oscillation fₘ mesurée avec une fréquence d'oscillation de référence fᵣ. La fréquence d'oscillation de référence fᵣ est la fréquence d'oscillation du circuit primaire 6 en présence du tube de pistolet d'alimentation en fluide adapté à l'alimentation du fluide qui convient à la réserve 1.

En cas de différence entre les fréquences fᵣ et fₘ, les moyens d'alerte 12 préviennent l'utilisateur de son erreur à venir par des moyens sonores ou lumineux.

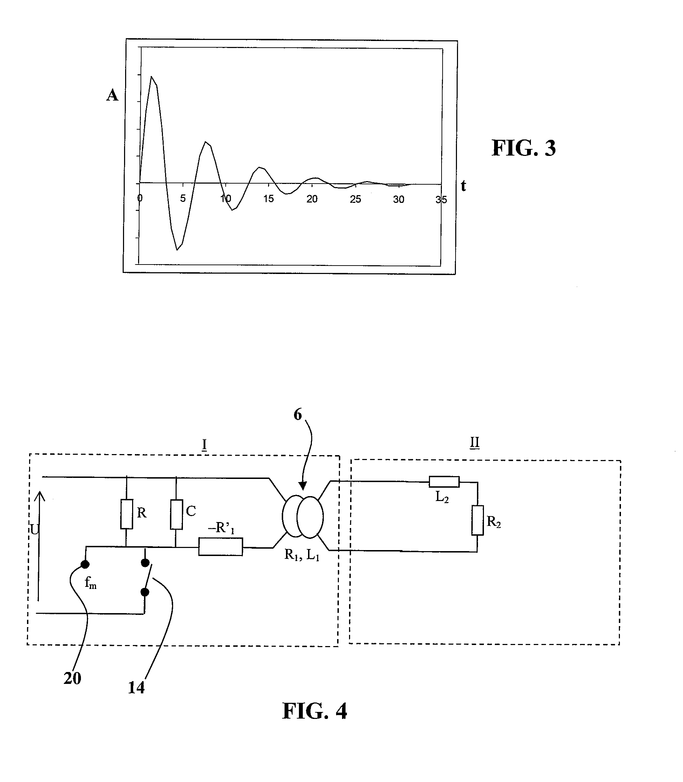

Les figures 2 et 3 illustrent plus en détail la structure et le fonctionnement du dispositif de la figure 1. La figure 2 est un schéma électrique équivalent du dispositif de la figure 1.

Le circuit primaire I comprend la bobine primaire 6 qui a une inductance propre L₁ et une résistance propre R₁. Un condensateur C est connecté en parallèle avec la bobine primaire 6. L'ensemble est alimenté par un générateur de tension continue U par l'intermédiaire d'un commutateur d'excitation 14 prévu dans le circuit de commande et de mesure 7. Le commutateur d'excitation 14 permet d'établir et d'interrompre l'alimentation pour faire osciller le circuit primaire I. En pratique, le circuit électrique de commande et de mesure 7 peut être réalisé à base d'un microprocesseur ou microcontrôleur associé à un programme enregistré. Le programme contient une séquence de reconnaissance de tube de pistolet, au cours de laquelle le microcontrôleur commande la fermeture puis l'ouverture du commutateur d'excitation 14, puis scrute la réception d'un signal de tension sur le point de mesure 20 pour en déterminer la fréquence de mesure fₘ.

On relève le signal de tension au point de mesure 20 après ouverture du commutateur d'excitation 14. Ainsi, il s'agit de la tension aux bornes de la bobine primaire 6. Le signal de tension est oscillant et est envoyé au circuit électrique de mesure 7 pour déterminer la fréquence de mesure fₘ.

Un circuit secondaire Il est constitué par le tube de pénétration 4b du pistolet d'alimentation 4. Le circuit secondaire II est schématisé par une inductance équivalente L₂ et une résistance équivalente R₂ en série.

La figure 3 représente la forme d'onde de la tension mesurée au point de mesure 20 (figure 2), ou amplitude A de la tension en fonction du temps t. L'analyse de ce signal permet de déterminer la fréquence d'oscillation fₘ du circuit.

Sur la figure 3, on constate un amortissement significatif du signal.

La figure 4 est un schéma électrique équivalent d'un dispositif de la figure 1 amélioré pour réduire l'amortissement du signal. Les mêmes moyens essentiels sont repérés par les mêmes références numériques que sur la figure 2.

Pour pallier à l'amortissement du signal illustré en figure 3, on ajoute une résistance négative -R'₁ tel que cela est illustré sur la figure 4. La résistance négative -R'₁ peut être construite à l'aide d'un amplificateur opérationnel. On choisit R'₁ tel que R'₁ ≈ R₁. La mesure de fréquence est alors plus précise.

Pour valider la solution selon l'invention, on a mesuré les différents paramètres d'un circuit équivalent du dispositif de la figure 1, et les fréquences du signal d'une part en présence d'un tube de pistolet d'alimentation en essence, d'autre part en présence d'un tube de pistolet d'alimentation en gasoil, et enfin en l'absence de tube de pistolet. Plusieurs pistolets de chaque type ont été testés. Les valeurs mesurées ont été les suivantes:
R = 6 200 Ω
C = 22 nF
diamètre intérieur de la bobine 6 = 35 mm
longueur de la bobine 6 = 6 mm
R₁ = 33 Ω
L₁ = 1,29 mH.

En l'absence de tube de pistolet, la fréquence fₘ était comprise entre 19,9 et 20 kHz.

En présence des tubes de pistolet d'alimentation en essence, la fréquence fₘ était comprise entre 20,6 et 20,8 kHz.

En présence des tubes de pistolet d'alimentation en gasoil, la fréquence fₘ était comprise entre 21,1 et 21,4 kHz.

Ces essais démontrent la possibilité de départager chacun des deux types de pistolets testés, un tube non métallique, et l'absence de tube.

Le mode de réalisation des figures 1 à 4 convient notamment pour une adaptation de l'invention sur des véhicules neufs, pendant leur construction. On peut alors prévoir à l'avance l'adaptation de la bobine primaire 6 sur le tube de guidage 4b avant son introduction dans la conduite d'alimentation. En pratique, la bobine primaire 6 peut être surmoulée dans la paroi du tube de guidage 4b, lui-même réalisé en matière plastique. En alternative, elle peut être surmoulée dans une matière plastique autour du tube de guidage 4b.

Selon un autre mode de réalisation, l'invention prévoit une adaptation sur des véhicules déjà finis, dans lesquels l'intégration et l'alimentation de la bobine primaire 6 dans la buse de guidage 9 ne sont plus possibles.

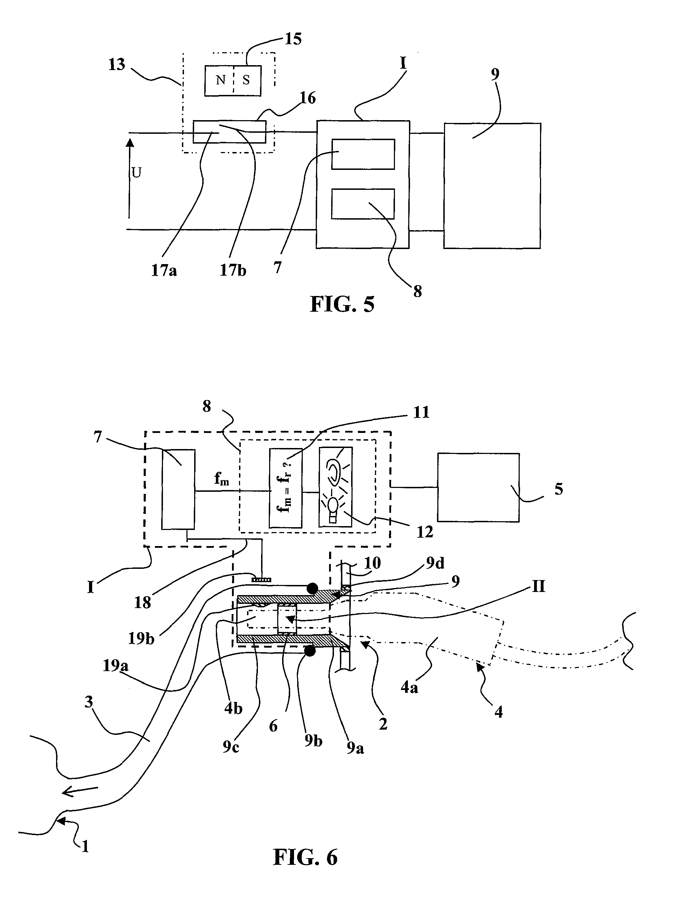

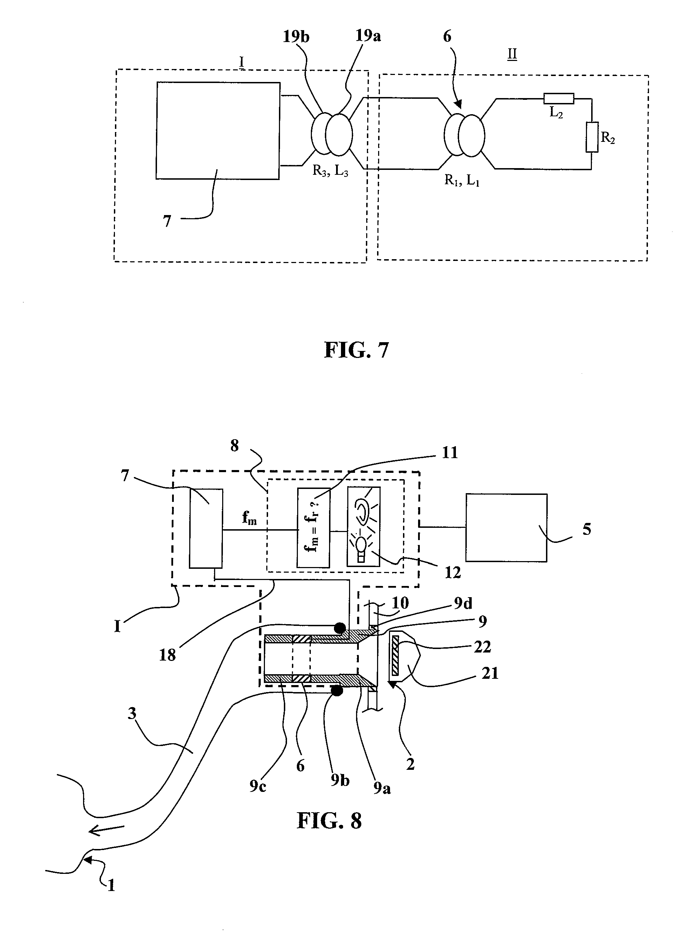

On considère alors les figures 6 et 7.

Dans le mode de réalisation illustré sur la figure 6, on retrouve les moyens essentiels du dispositif illustré sur la figure 1, et ces moyens essentiels sont repérés par les mêmes références numériques.

La différence réside dans l'alimentation de la bobine primaire 6, et dans sa position.

Dans ce cas, la bobine primaire 6 est à nouveau orientée coaxialement et placée à proximité de l'orifice d'alimentation en fluide 2. Elle est engagée coaxialement à l'intérieur du tube de guidage 9c, et présente une forme tubulaire à faible épaisseur pour laisser un espace suffisant permettant le passage du tube d'alimentation 4b du pistolet d'alimentation 4.

La bobine primaire 6 est alimentée depuis le circuit de commande et de mesure 7 par l'intermédiaire d'une bobine réceptrice 19a et d'une bobine émettrice 19b. La bobine réceptrice 19a est connectée en série avec la bobine primaire 6, et est logée également à l'intérieur du tube de guidage 9c, orientée radialement, et de forme incurvée et assez mince pour laisser le passage du tube de pénétration 4b du pistolet d'alimentation 4. La bobine émettrice 19b est placée à l'extérieur de la conduite d'alimentation 3 qui est elle-même en matière plastique, et est connectée au circuit électrique de commande et de mesure 7. La bobine émettrice 19b et la bobine réceptrice 19a sont couplées magnétiquement l'une à l'autre à travers la paroi en matière plastique de la canalisation d'alimentation 3 et à travers la paroi en matière plastique du tube de guidage 9c.

La bobine primaire 6 et la bobine réceptrice 19a forment un ensemble tubulaire, avantageusement noyé dans une matière plastique, et introduit axialement dans le tube de guidage 9c.

La figure 7 est un schéma électrique équivalent du circuit de la figure 6, où l'on retrouve les éléments repérés par les mêmes références numériques.

On comprend que, dans ce mode de réalisation, le dispositif peut être mis en place sur un véhicule sans dissocier la buse de guidage 9 et la conduite d'alimentation 3. L'ensemble formé par la bobine primaire 6 et la bobine réceptrice 19a, en étant noyé dans une matière plastique, évite également tout contact entre des conducteurs et l'atmosphère intérieure de la conduite d'alimentation 3.

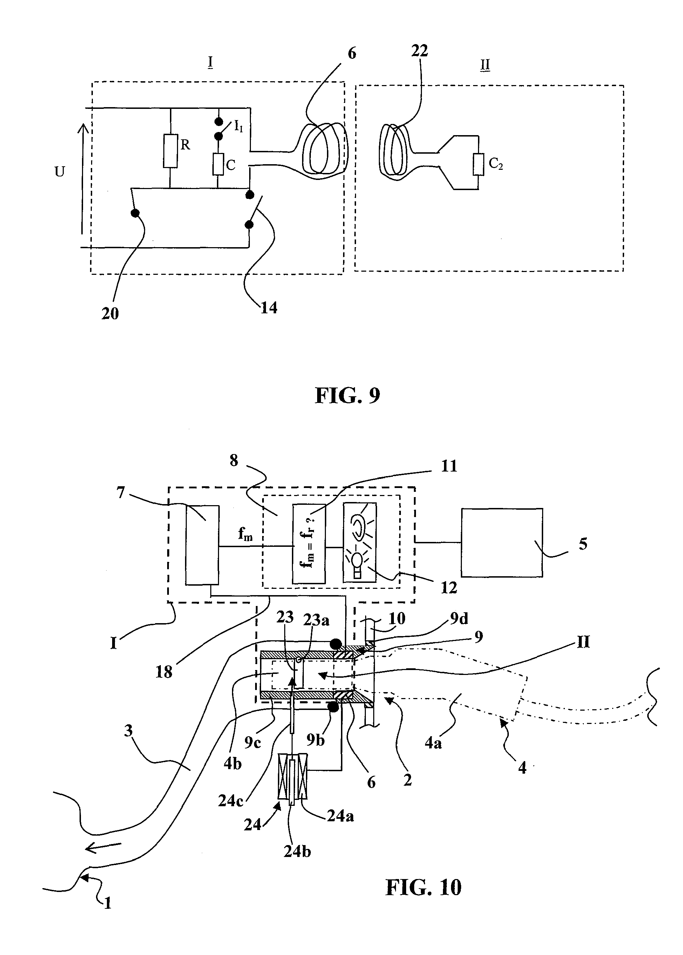

Les figures 8 et 9 illustrent un mode de réalisation plus complet, qui reprend les moyens essentiels du mode de réalisation de la figure 1 et de la figure 2, en ajoutant des moyens de détection de présence d'un bouchon apte à obturer l'orifice d'alimentation 2.

On retrouve ainsi, sur la figure 8, l'orifice d'alimentation 2 formé par la buse de guidage 9, avec la bobine primaire 6 et les moyens pour son alimentation et pour le traitement des signaux qu'elle produit.

La différence est la présence d'un bouchon 21, dans lequel sont intégrés une bobine secondaire 22 et un condensateur secondaire (non représenté sur la figure), tous deux connectés en série l'un avec l'autre.

On se réfère maintenant à la figure 9, qui illustre plus en détail le schéma électrique équivalent du dispositif de la figure 8.

On retrouve un circuit secondaire Il formé par la bobine secondaire 22 et par le condensateur secondaire C2. On retrouve la bobine primaire 6, avec le condensateur C avec lequel elle forme un circuit résonant lors des séquences de détection de pistolet, et avec la résistance R.

Dans ce mode de réalisation, le condensateur C est en série avec un commutateur de test I1, l'ensemble avec la bobine primaire 6 et la résistance R étant connecté en série avec le commutateur d'excitation 14 et une source de tension continue U telle qu'une batterie de véhicule.

Dans le circuit électrique de commande et de mesure 7, on prévoit une séquence de programme de contrôle de bouchon, au cours de laquelle le microcontrôleur provoque l'ouverture du commutateur de test I1, puis provoque la fermeture du commutateur d'excitation 14 puis son ouverture. La séquence de programme comprend aussi une séquence de mesure, au cours de laquelle le microcontrôleur scrute la réception d'un signal de tension sur le point de mesure 20, après l'ouverture du commutateur principal 14.

Dans ce cas, en présence d'un bouchon 21, l'ouverture du commutateur d'excitation 14 provoque l'apparition d'une impulsion de tension aux bornes de la bobine primaire 6, impulsion qui elle-même génère une impulsion électromagnétique transmise à la bobine secondaire 22. Le circuit résonant formé par la bobine secondaire 22 et par le condensateur secondaire C2 entre alors en oscillation, laquelle oscillation étant transmise à la bobine primaire 6 qui elle-même la transmet au circuit électrique de commande et de mesure 7.

En l'absence d'un bouchon 21, l'ouverture du commutateur d'excitation 14 ne génère pas d'oscillation dans les circuits électriques, et cette information est transmise au circuit de commande et de mesure 7.

Lors d'une séquence de contrôle de présence de bouchon, le circuit de commande et de mesure 7 peut donc émettre un signal de présence de bouchon à réception sur son entrée d'un signal oscillant après ouverture du commutateur principal 14, et peut émettre un signal d'absence de bouchon à réception sur son entrée d'un signal non oscillant.

Une séquence de détection de présence de bouchon peut être prévue tant dans les applications aux véhicules que dans les applications aux autres types de réserves.

Dans le cas d'une application aux véhicules, une séquence de contrôle de présence de bouchon peut être activée lors du démarrage ou au début du roulage du véhicule. Le circuit de commande et de mesure 7 est alors aussi alimenté par une source de tension positive après mise du contact du véhicule, indépendamment de la position de la trappe lorsque celle-ci existe. Une alerte interne au véhicule peut alors être émise en cas d'absence du bouchon.

Une séquence de contrôle de présence de bouchon peut aussi être activée lors de la fermeture de la trappe si un organe de sauvegarde temporisé de l'alimentation véhicule (+BATT) permet de court-circuiter le capteur de position de trappe éventuel. Le message d'alerte peut alors être externe au véhicule.

Une séquence de contrôle de présence de pistolet peut aussi être activée lors de la mise du contact et/ou au démarrage du véhicule. Une alerte interne au véhicule peut alors être émise en cas de présence du pistolet.

Le dispositif peut aussi être programmé pour émettre une alerte au démarrage du véhicule s'il est encore alimenté, c'est-à-dire si la trappe est restée ouverte.

La figure 5 représente un mode de réalisation préféré du dispositif de la figure 1 ou de la figure 6, amélioré d'un contacteur d'entrée 13.

Les véhicules comprennent un réservoir 1 généralement fermé par une trappe d'accès à proximité de l'orifice d'alimentation 2.

Le contacteur d'entrée 13 est un capteur de position de trappe. Il permet d'alimenter le circuit primaire I du dispositif de l'invention seulement lorsque la trappe est ouverte. Le contacteur d'entrée 13 ici représenté est une ampoule REED. Un tel contacteur d'entrée 13 à ampoule REED comprend un aimant de contacteur 15 ainsi qu'un tube de verre 16 contenant les contacts 17a et 17b.

Lorsque l'aimant de contacteur 15 se rapproche (à l'ouverture de la trappe), les lignes de flux magnétique traversent les contacts 17a et 17b. Le contact 17a devient Nord et le contact 17b devient Sud. Les contacts 17a et 17b se rapprochent donc jusqu'à se toucher et le circuit primaire I du dispositif de l'invention est alors alimenté par le générateur de tension U. Le circuit électrique de commande et de mesure 7 et les moyens de détection 8 peuvent donc fonctionner.

L'alimentation est interrompue dès la fermeture de la trappe, évitant toute consommation inutile d'énergie électrique.

A l'ouverture de la trappe, dès la commutation du contacteur d'entrée 13, le circuit de commande et de mesure 7 est alimenté. On peut prévoir que le circuit de commande et de mesure 7 entreprend alors immédiatement une séquence de contrôle de présence de pistolet qui, en l'absence de pistolet d'alimentation 4, permet de recalibrer le circuit électrique de commande et de mesure 7.

Si la trappe est ouverte depuis un temps très important (en regard du temps habituel pour le remplissage de la réserve), c'est-à-dire si le contacteur d'entrée 13 reste commuté pendant une durée supérieure à un seuil déterminé, le système peut passer en mode "basse consommation" par arrêt de l'excitation du circuit électrique de commande et de mesure 7 ou espacement très important de son excitation, afin de ne pas décharger la batterie.

Dans le mode de réalisation illustré sur les figures 10 à 17, le dispositif de contrôle d'alimentation selon l'invention a en outre pour but de rendre impossible le remplissage de la réserve 1 par un carburant inapproprié.

On retrouve, dans ce mode de réalisation, les moyens essentiels des modes de réalisation précédents des figures 1 à 9, et en particulier les moyens qui permettent de détecter la présence et le type du pistolet d'alimentation en fluide 4, et les moyens de la figure 5 à contacteur d'entrée 13 et trappe d'accès.

En outre, le dispositif permet d'empêcher l'erreur sans engendrer de risques supplémentaires découlant d'une interdiction inappropriée de l'accès à la réserve.

Pour cela, l'accès à la réserve 1 est obturé par un clapet 23 dont le verrouillage et le déverrouillage sont conditionnés par le signal issu des moyens de détection de présence et de type de pistolets d'alimentation en fluide, ces moyens étant aptes à détecter le tube de pénétration 4b du pistolet d'alimentation 4 en amont du clapet 23 dans le sens d'écoulement des fluides vers la réserve 1.

Le clapet 23 est déplaçable par l'action de pénétration du tube de pénétration 4b du pistolet d'alimentation en fluide 4. Pour cela, le clapet 23 peut être articulé en rotation autour d'un axe transversal 23a situé en partie supérieure du clapet 23, dans le tube de guidage 9c. Le clapet 23 est en position intermédiaire dans le tube de guidage 9c.

La bobine primaire 6, dans ce mode de réalisation, est placée au voisinage de l'entrée du tube de guidage 9c, en amont du clapet 23.

Le dispositif comprend en outre un actionneur de verrouillage 24, alimenté par le circuit électrique de commande et de mesure 7, et apte à interdire ou à autoriser sélectivement le pivotement du clapet 23 sous la poussée du tube de pénétration 4b.

L'actionneur de verrouillage 24 peut par exemple comprendre un solénoïde 24a dans lequel coulisse un noyau magnétique 24b solidaire d'une butée de verrouillage 24c, avec un moyen de rappel de la butée de verrouillage 24c et du noyau magnétique 24b en position escamotée comme illustré sur la figure 10, par exemple par un ressort de rappel et/ou par la pesanteur.

Ainsi, en position d'attente telle qu'illustrée sur la figure 10, l'actionneur de verrouillage 24 n'est pas alimenté, et la butée de verrouillage 24c est escamotée, laissant possible le pivotement du clapet 23. Le clapet 23 reste toutefois inaccessible, occulté par la trappe d'accès qui est fermée.

On implante l'actionneur de verrouillage 24 de telle façon que la butée de verrouillage retombe de son propre poids en cas de défaillance du ressort de rappel.

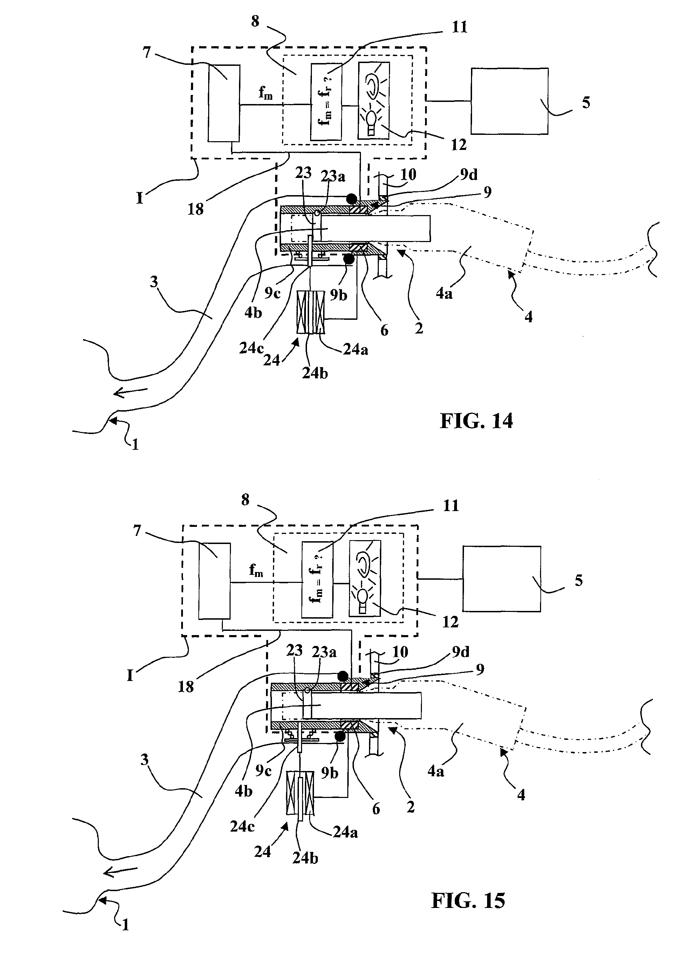

On considère maintenant la suite des figures 14, 15 et 16, illustrant les étapes de fonctionnement du dispositif de contrôle d'alimentation à verrouillage d'accès de la figure 10, dans un premier mode de réalisation à déverrouillage conditionnel.

Dès que la trappe d'accès s'ouvre, ou que le bouchon est retiré, le dispositif de détection de présence est alimenté. Le circuit électrique de commande et de mesure 7 provoque l'alimentation du solénoïde 24a, pour placer la butée de verrouillage 24c en position de verrouillage, interdisant l'ouverture du clapet 23. Le dispositif de verrouillage est alors dans l'état illustré sur la figure 14.

L'utilisateur peut introduire l'extrémité du tube de pénétration 4b dans la première partie du tube de guidage 9c, en amont du clapet 23. Du fait de la position de la bobine primaire 6 en amont du clapet 23, celle-ci est traversée par le tube de pénétration 4b. Le dispositif de détection peut alors détecter la présence du pistolet, et apprécier le type de pistolet.

En cas de détection d'un pistolet inapproprié, ce dernier ne peut pas pénétrer au-delà du clapet 23, qui reste en position verrouillée.

Le clapet 23 peut être de type étanche, obturant complètement l'orifice d'alimentation 2 lorsqu'il est fermé, afin de refouler un liquide que l'on souhaiterait néanmoins introduire par un pistolet laissé partiellement engagé.

En alternative, le clapet 23 peut être de type couronne de recouvrement externe, agencé pour obturer uniquement un dispositif de détection de fin de remplissage d'un pistolet équipé d'un tel dispositif. Ce dispositif de détection de fin de remplissage comprend un tube intérieur conduisant à un capteur sensible à la pression de liquide dans la zone d'extrémité du pistolet, et provoquant la fermeture du pistolet lorsque le liquide refoule dans le tube de détection. De la sorte, on interrompt également le remplissage par un pistolet qui n'est pas approprié. Toutefois, le remplissage reste possible par un pistolet dépourvu de dispositif de détection de fin de remplissage, ou par un pistolet qui est reculé en amont de la bobine, ou par un dispositif non normalisé tel qu'un bidon.

Tant qu'un pistolet correct n'est pas détecté, ou que la trappe n'est pas refermée, ou que le bouchon n'est pas remis, cet état de verrouillage est maintenu.

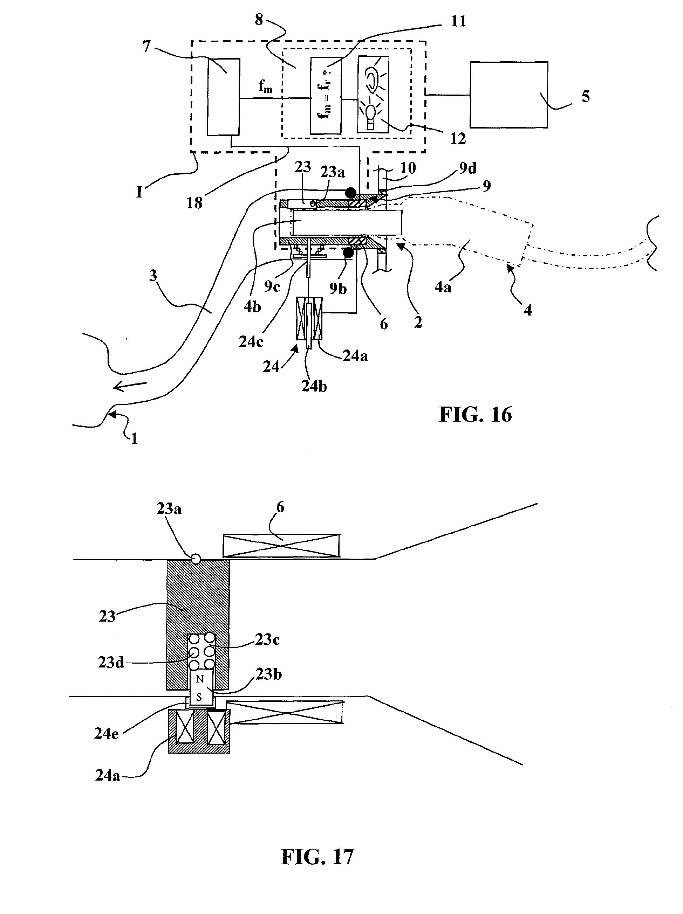

Sur la figure 15, un pistolet correct a été détecté. Dans ce cas, le circuit électrique de commande et de mesure 7 supprime l'alimentation du solénoïde 24a, et la butée de verrouillage 24c retombe en position escamotée. Le clapet 23 peut alors pivoter, sous la poussée axiale du tube de pénétration 4b. On atteint alors l'état illustré sur la figure 16, dans lequel le tube de pénétration 4b a pénétré au-delà du clapet 23, pour la pénétration du fluide dans la réserve 1.

Dans le mode de réalisation qui vient d'être décrit, on interdit par défaut le remplissage : quand on ouvre la trappe, le dispositif se met à l'état verrouillé ; quand on détecte que le pistolet est correct, on déverrouille le clapet et on autorise le remplissage.

La logique inverse peut être plus favorable. Dans ce cas, par défaut, on autorise le remplissage ; quand on détecte un pistolet qui n'a pas la forme ou la structure appropriée correspondant au carburant choisi, on verrouille l'accès pour interdire le remplissage.

L'intérêt de cette logique inverse peut être d'éviter de faire fonctionner le système de verrouillage électromécanique lorsque tout est normal, c'est-à-dire lorsque le pistolet présente la forme appropriée correspondant au carburant choisi. En effet, le fonctionnement d'un tel système électromécanique produit toujours un bruit et/ou un retard de fonctionnement, ce qui donne à l'utilisateur une impression de fonctionnement anormal ou de système trop lent.

La logique inverse, qui autorise le remplissage par défaut, est toutefois plus complexe à mettre en oeuvre, car il faut réagir rapidement pour verrouiller l'accès avant que le pistolet atteigne le clapet.

Par ailleurs, lorsqu'on approche un pistolet lentement de l'embouchure de remplissage, l'influence de celui-ci sur les ondes électromagnétiques augmente au fur et à mesure de son approche. De la même façon, l'analyse des signaux montre une variation de la fréquence qui augmente progressivement au fur et à mesure de l'approche. La fréquence se stabilise finalement quand le pistolet dépasse la bobine de mesure. Or, à l'état stabilisé, un pistolet d'alimentation en gasoil provoque une variation de fréquence plus forte qu'un pistolet d'alimentation en essence. Par conséquent, dans le cas de la logique inverse, lorsqu'on approche lentement un pistolet d'alimentation en gasoil, avant la stabilisation du signal, le système peut croire reconnaître un pistolet d'alimentation en essence. Comme le système doit réagir rapidement, il commande le verrouillage de l'accès. Quand le pistolet poursuit l'avance, le système reconnaît enfin le pistolet d'alimentation en gasoil, et déverrouille l'accès. Pendant le fonctionnement, il s'est donc produit une erreur de diagnostic, qui provoque le fonctionnement anormal du système, conservant les inconvénients mentionnés précédemment de la première logique.

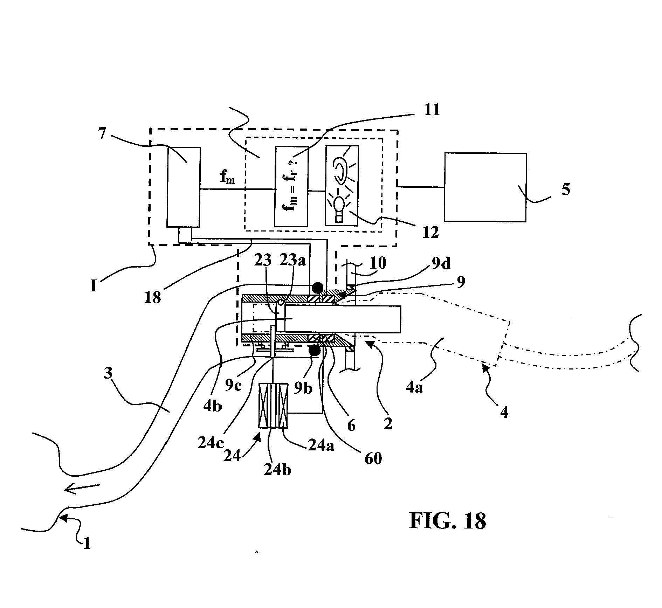

Pour résoudre ce problème, on peut prévoir des moyens pour fiabiliser l'identification du pistolet, par exemple comme représenté sur la figure 18.

Pour cela, on ajoute une seconde bobine primaire 60, fixée à la réserve 1, 3, à proximité et en aval de la bobine primaire 6, pour être traversée par le tube de pénétration 4b du pistolet d'alimentation en fluide 4 lors de son introduction dans l'orifice d'alimentation en fluide 2. La seconde bobine primaire 60 est alimentée par le circuit électrique de commande et de mesure 7 de la même manière que la bobine primaire 6, de façon à générer des ondes électromagnétiques dans l'espace intérieur de la seconde bobine primaire 60. Dans le circuit électrique de commande et de mesure 7, des moyens de détection, sensibles à la forme d'onde des courants ou tensions qui apparaissent dans la seconde bobine primaire 60, permettent de distinguer, en fonction de la forme d'onde des courants ou tensions dans la seconde bobine primaire 60, la présence d'un pistolet d'alimentation en fluide 4.

Lorsque la seconde bobine primaire 60 détecte ainsi la présence du tube de pénétration 4b, les moyens de détection 8 valident la détection faite par la bobine primaire 6, car cela garantit que le pistolet est suffisamment introduit dans la bobine primaire 6 pour que cette dernière détermine de manière certaine quel est le type de pistolet. On fiabilise ainsi la détection du type de pistolet, pour ne produire le verrouillage que si le pistolet ne correspond pas au type de carburant choisi.

Mais une difficulté est que ce mode de réalisation peut laisser potentiellement l'accès possible à un utilisateur très rapide, si le temps de passage du pistolet depuis la seconde bobine primaire 60 jusqu'à l'obturateur 23 est inférieur au temps de traitement des signaux par l'électronique et de réponse de l'actionneur de verrouillage 24.

Il est alors souhaitable de prévoir un moyen d'avertissement sonore ou lumineux de l'utilisateur lors de l'introduction très rapide d'un pistolet ne correspondant pas au carburant choisi. Par exemple, on peut alimenter les bobines par un courant électrique à fréquence audible, par exemple à deux tonalités de 5 kHz et 2 kHz, lors de la détection d'un pistolet inapproprié.

Ainsi, le système est totalement silencieux tant que le fonctionnement est normal, c'est-à-dire tant qu'un pistolet normal est introduit, et le système génère des vibrations audibles en cas d'introduction très rapide d'un pistolet anormal.

Selon l'invention, le type de pistolet 4 est détecté par le dispositif de détection, sans contact physique avec le tube de pénétration 4b, et les signaux produits permettent de piloter l'actionneur de verrouillage 24 pour interdire la pénétration du tube de pénétration 4b dans le cas où le tube n'a pas la forme ou la structure appropriée correspondant au carburant choisi.

La figure 17 illustre une variante du dispositif de contrôle d'alimentation à verrouillage.

Le clapet 23 porte un aimant permanent 23b, engagé dans un logement 23c ouvert face au solénoïde 24a, et rappelé dans le logement 23c par un ressort de déverrouillage 23d. Par l'alimentation du solénoïde 24a, l'aimant 23b est attiré, et sort du logement 23c en venant pénétrer dans un logement correspondant 24e du tube de guidage 9c, et produit le verrouillage du clapet 23. En relâchant l'alimentation du solénoïde 24a, on provoque le déverrouillage.

On peut prévoir d'alimenter en série le solénoïde 24a et la bobine primaire 6. Dans ce cas, un courant important peut piloter le solénoïde 24a pour le verrouillage, et un courant plus faible peut suffire pour piloter le dispositif de reconnaissance de tube de pistolet. Le but est de limiter les fils d'interconnection et les composants de commande.

Dans un dispositif de contrôle d'alimentation à verrouillage, le circuit électrique de commande et de mesure 7 peut avantageusement contenir un programme enregistré ayant une séquence de contrôle de présence et de nature de moyen d'alimentation en fluide, qui commande le verrouillage du dispositif de verrouillage 23, 24 si le moyen d'alimentation en fluide ne présente pas l'une des structures autorisées définies par des paramètres enregistrés dans une mémoire du circuit électrique de commande et de mesure 7.

Les informations de présence du tube de pénétration 4b, qui sont générées par le dispositif de détection, peuvent être mémorisées dans une mémoire appropriée.

On peut ainsi conserver l'historique des pénétrations de tubes de pénétration dans le dispositif, par exemple pour vérifier que l'alimentation du moteur a toujours été correcte et qu'un défaut du moteur ne peut pas provenir d'une alimentation incorrecte qui ferait ainsi échapper à l'obligation de garantie du constructeur.

Ces informations peuvent également être utilisées pour gérer les cas d'utilisation anormale, par exemple un oubli de trappe ouverte, un oubli de bouchon, un accès illégitime ou douteux réalisé, ou même un oubli du pistolet.

Le circuit électrique de commande et de mesure 7 peut contenir un programme enregistré avec un algorithme de comptage de la durée de présence du moyen d'alimentation en fluide. Le résultat du comptage peut être communiqué à un processeur embarqué sur le véhicule, lequel processeur ayant une fonction d'indication du niveau de remplissage.

Le résultat du comptage peut alors servir par exemple à remettre à une valeur correcte l'information de remplissage plein donnée par le processeur embarqué : un pistolet présent pendant un temps significatif peut être interprété comme l'assurance que le réservoir a été correctement rempli.

Cette procédure permet de réduire les erreurs sur l'information de niveau de carburant. En effet, l'information de niveau de carburant est soumise au positionnement du véhicule en tangage. Ce positionnement, générateur d'erreur de niveau de carburant, peut être de courte durée (circulation en pente) ou de longue durée (stationnement en pente). Des algorithmes sont disponibles dans le processeur embarqué pour minimiser ces erreurs. Mais ces algorithmes peuvent engendrer une erreur d'affichage du niveau de carburant immédiatement après remplissage. Cette incohérence d'informations est source d'insatisfaction du client.

En utilisant l'information du résultat du comptage, et partant du principe que les pompes à essence ne sont pas en pente, l'information issue du capteur de niveau de carburant peut être prise comme totalement fiable au démarrage du véhicule, et par exemple afficher une information de "plein" alors que l'algorithme initial aurait donné un information "presque plein". Ainsi, le processeur donne une indication de niveau "plein" faisant référence lorsque le résultat du comptage excède une durée prédéfinie.

Selon l'invention, on cherche à éviter les cas d'immobilisation possible des véhicules terrestres à moteur thermique.

Un premier cas d'immobilisation pourrait être une erreur du dispositif électronique qui ne détecterait pas la présence d'un pistolet valide.

Pour éviter l'immobilisation, on peut alors prévoir un dispositif forçant l'information "trappe ouverte" en "trappe fermée". Le système de verrouillage, qui n'est pas alimenté, est à l'état déverrouillé. Tous les dispositifs d'alimentation en fluide, y compris ceux qui ne sont pas normalisés, peuvent être introduits et délivrer un fluide dans la réserve 1. La surveillance par le dispositif n'est plus assurée, mais le véhicule n'est pas immobilisé. Un autre inconvénient possible de cette stratégie est de ne pas mémoriser l'accès illégitime par des sources de fluide indésirables.

Une autre solution pour éviter l'immobilisation possible du véhicule est de permettre l'ouverture incomplète de la trappe, en évitant d'activer le dispositif de mesure, et d'introduire un tube de remplissage. Une fois l'introduction du tube de remplissage réalisée, le clapet 23 se trouve repoussé, et l'utilisateur peut ouvrir la trappe complètement. Le système peut alors mémoriser la présence du tube introduit.

Une autre possibilité, pour éviter l'immobilisation possible du véhicule, est de prévoir un dispositif additionnel tel qu'un commutateur additionnel, un loquet de déverrouillage mécanique, libérant l'accès et pouvant être mémorisé.

Une autre façon est de prévoir un protocole particulier d'ouverture/fermeture multiple de la trappe ou d'approche du pistolet, libérant l'accès et pouvant être mémorisé. Dans ce cas, il peut être nécessaire de sauvegarder l'alimentation comme décrit précédemment.

Une autre possibilité est de prévoir une temporisation : lorsque la trappe est ouverte depuis un temps important, l'accès est systématiquement libéré.

Un second risque d'immobilisation possible du véhicule résulte d'une situation dans laquelle l'actionneur de verrouillage 24 serait commandé en permanence par le circuit électrique de commande et de mesure 7 lorsque la trappe est ouverte.

Il est alors nécessaire, pour des raisons de risque de mise à feu, de protéger l'actionneur de verrouillage 24 contre une surchauffe. Une telle surchauffe peut être liée à une défaillance de l'actionneur de verrouillage 24 ou à une commande prolongée anormalement. On peut pour cela intégrer un système de désactivation thermique de type bilame ou composant à fort coefficient positif de variation thermique de résistance (CTP). Ce système peut être dimensionné de telle façon qu'une commande permanente ne pouvant pas être coupée par un des dispositifs électroniques finisse par disparaître suite à l'échauffement raisonnable de l'actionneur.

Une troisième possibilité de l'immobilisation du véhicule peut être le blocage de l'équipage mobile (noyau magnétique 24b et butée de verrouillage 24c). Bien que ce cas soit lui aussi très peu probable, il est possible de prévoir un dispositif de déverrouillage manuel de l'accès à la réserve 1.

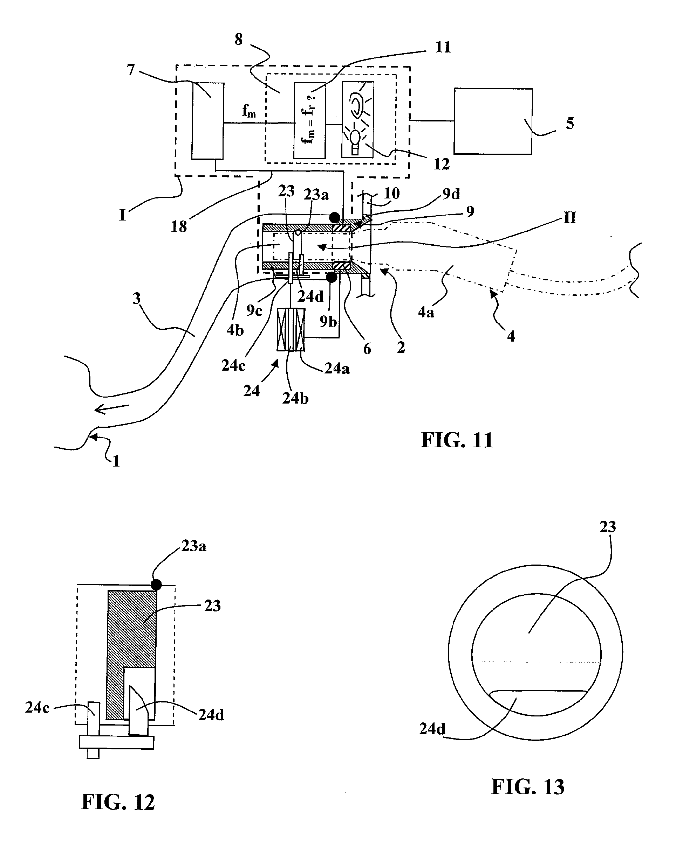

Un mode de réalisation d'un tel dispositif de déverrouillage manuel est illustré sur les figures 11 à 13 : un doigt de déverrouillage 24d, accessible par l'utilisateur depuis l'extérieur à travers le tube de guidage 9c, permet, par une poussée manuelle transversale, d'abaisser la butée de verrouillage 24c, et ainsi de libérer physiquement le clapet 23.

En alternative, selon un autre mode de réalisation, un dispositif de déverrouillage manuel peut comprendre un dispositif à ressort de rappel, par exemple intégré dans la trappe et permettant, par une manipulation de l'utilisateur, d'interrompre l'alimentation du circuit électrique de commande et de mesure 7, par exemple par éloignement de l'aimant 15 vis-à-vis de l'ampoule REED 16 (figure 5), ou de façon générale en éloignant deux éléments de connexion. De la sorte, on force l'information "trappe ouverte" en "trappe fermée", ce qui déverrouille le clapet 23 par suppression de l'alimentation du circuit électrique de commande et de mesure 7 et abaissement de la butée de verrouillage 24c.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de contrôle d'alimentation pour éviter les erreurs dans le choix du fluide lorsqu'on alimente en fluide une réserve (1, 3) à l'aide d'un pistolet d'alimentation en fluide (4), le pistolet (4) ayant un tube de pénétration (4b) que l'on introduit dans un orifice d'alimentation en fluide (2) de la réserve (1, 3), la structure du tube de pénétration (4b) étant spécifique en fonction du fluide délivré, **caractérisé en ce qu'**il comprend :
- une bobine primaire (6), fixée à la réserve (1, 3) à proximité de l'orifice d'alimentation en fluide (2) pour être traversée par le tube de pénétration (4b) du pistolet d'alimentation en fluide (4) lors de son introduction dans l'orifice d'alimentation en fluide (2),
- un circuit électrique de commande et de mesure (7) apte à alimenter la bobine primaire (6) de manière à générer des ondes électromagnétiques dans l'espace intérieur de la bobine primaire (6),
- des moyens de détection (7, 8), sensibles à la forme d'onde des courants ou tensions qui apparaissent dans la bobine primaire (6), et qui permettent de distinguer, en fonction de ladite forme d'onde des courants ou tensions dans la bobine primaire (6), la présence et le type de pistolet d'alimentation en fluide (4).

2. Dispositif selon la revendication 1, **caractérisé en ce qu'**il comprend un condensateur (C) connecté en parallèle avec la bobine primaire (6), l'ensemble étant connecté en série avec un commutateur d'excitation (14) pour être alimenté par un générateur de tension (5) continue.

3. Dispositif selon la revendication 2, **caractérisé en ce que** le circuit électrique de commande et de mesure (7) comprend une résistance négative (-R'₁) connectée en série avec la bobine primaire (6) aux bornes du condensateur (C).

4. Dispositif selon l'une des revendications 2 ou 3, **caractérisé en ce que** le circuit de commande et de mesure (7) est apte à mesurer la fréquence d'oscillation de la tension aux bornes de la bobine primaire (6) après l'ouverture du commutateur d'excitation (14), pour produire un signal de fréquence mesurée (fₘ).

5. Dispositif selon la revendication 4, **caractérisé en ce que** les moyens de détection (8) comprennent :
- des moyens de comparaison (11) pour recevoir le signal de fréquence mesurée (fₘ) et pour comparer ce signal de fréquence mesurée (fₘ) avec un signal de fréquence de référence (fᵣ) propre au type de pistolet d'alimentation en fluide adapté à l'alimentation du fluide qui convient à la réserve (1, 3), et pour produire un signal d'erreur en cas de différence sensible entre le signal de fréquence mesurée (fₘ) et le signal de fréquence de référence (fᵣ),
- des moyens d'alerte (12) pour attirer l'attention de l'utilisateur en cas de présence d'un signal d'erreur.

6. Dispositif selon la revendication 5, **caractérisé en ce que** les moyens d'alerte (12) émettent un signal sonore ou lumineux perceptible par un utilisateur.

7. Dispositif selon l'une quelconque des revendications 1 à 6, **caractérisé en ce que** :
- il comprend un condensateur (C) connecté en parallèle avec la bobine primaire (6), l'ensemble étant connecté en série avec un commutateur d'excitation (14) pour être alimenté par un générateur de tension (5) continue,
- le condensateur (C) est lui-même connecté en série avec un commutateur de test (11),
- un circuit résonant secondaire (22, C2) est prévu dans un bouchon (21) d'obturation de l'orifice d'alimentation (2),
- le circuit de commande et de mesure (7) contient une séquence de contrôle de présence de bouchon au cours de laquelle le commutateur de test (11) est ouvert, et le circuit de commande et de mesure (7) commande la fermeture puis l'ouverture du commutateur d'excitation (14) puis la réception et l'analyse du signal de tension à un point de mesure (20) et la génération d'un signal de présence de bouchon en cas de réception d'un signal oscillant, et la génération d'un signal d'absence de bouchon en cas de réception d'un signal non oscillant.

8. Dispositif selon l'une quelconque des revendications 1 à 7, **caractérisé en ce qu'**il comprend un dispositif de verrouillage (23, 24), positionné en aval de la bobine primaire (6), et apte à s'opposer sélectivement à la progression du tube de pénétration (4b) vers la réserve (1, 3) et/ou à l'écoulement du fluide vers la réserve (1, 3).

9. Dispositif selon la revendication 8, **caractérisé en ce que** le dispositif de verrouillage (23, 24) comprend :
- un clapet d'obturation (23) conçu pour prendre sélectivement un état d'obturation dans lequel il obture l'accès à la réserve (1, 3), et un état de libération,
- un actionneur de verrouillage (24) piloté par le circuit électrique de commande et de mesure (7), et sollicité par un moyen de rappel, l'actionneur de verrouillage (24) pouvant prendre un état verrouillé et un état non verrouillé,
- l'actionneur de verrouillage (24) assurant le maintien du clapet d'obturation (23) à l'état d'obturation lorsqu'il est lui-même à l'état verrouillé, et autorisant le clapet d'obturation (23) à prendre l'état de libération lorsqu'il est lui-même à l'état non verrouillé.

10. Dispositif selon la revendication 9, **caractérisé en ce que** l'actionneur de verrouillage (24) est sollicité vers son état non verrouillé par des moyens de rappel élastiques et/ou est implanté de façon à retourner à l'état non verrouillé sous son propre poids.

11. Dispositif selon l'une quelconque des revendications 8 à 10, **caractérisé en ce qu'**il comprend un système de désactivation thermique pour limiter les risques de mise à feu de l'actionneur de verrouillage (24).

12. Dispositif selon la revendication 11, **caractérisé en ce que** le système de désactivation thermique est de type bilame ou composant à fort coefficient positif de variation thermique de résistance (CTP).

13. Dispositif selon l'une quelconque des revendications 8 à 12, **caractérisé en ce qu'**il comprend un dispositif de déverrouillage manuel de l'accès à la réserve (1, 3).

14. Dispositif selon la revendication 13, **caractérisé en ce que** le dispositif de déverrouillage manuel comprend un doigt de déverrouillage (24d), accessible par l'utilisateur depuis l'extérieur à travers le tube de guidage (9c) et permettant d'abaisser la butée de verrouillage (24c).

15. Dispositif selon la revendication 13, **caractérisé en ce que** le dispositif de déverrouillage manuel comprend un dispositif à ressort de rappel, permettant, par une manipulation de l'utilisateur, d'interrompre l'alimentation du circuit électrique de commande et de mesure (7).

16. Dispositif selon l'une quelconque des revendications 8 à 15, **caractérisé en ce que** le circuit électrique de commande et de mesure (7) contient un programme enregistré ayant une séquence de contrôle de présence et de nature de moyen d'alimentation en fluide, qui commande le verrouillage du dispositif de verrouillage (23, 24) si le moyen d'alimentation en fluide ne présente pas l'une des structures autorisées définies par des paramètres enregistrés dans une mémoire du circuit de commande et de mesure (7).

17. Dispositif selon la revendication 16, **caractérisé en ce que** le programme enregistré contient un algorithme de comptage de durée de présence du moyen d'alimentation en fluide, le résultat du comptage étant communiqué à un processeur ayant une fonction d'indication du niveau de remplissage, le processeur donnant une indication de niveau "plein" faisant référence lorsque le résultat du comptage excède une durée prédéfinie.

18. Dispositif selon l'une quelconque des revendications 8 à 17, **caractérisé en ce que** le clapet (23) est de type étanche, obturant complètement l'orifice d'alimentation en fluide (2) lorsqu'il est fermé.

19. Dispositif selon l'une quelconque des revendications 8 à 17, **caractérisé en ce que** le clapet (23) est de type couronne de recouvrement externe, agencé pour obturer un dispositif de détection de fin de remplissage d'un pistolet équipé d'un tel dispositif.

20. Dispositif selon l'une quelconque des revendications 1 à 19, **caractérisé en ce qu'**il comprend un contacteur d'entrée (13), connecté en série dans l'alimentation du circuit électrique primaire (6), et apte à commuter pour alimenter le circuit électrique de commande et de mesure (7) en fonction de la position d'un organe externe tel qu'une trappe d'accès à l'orifice d'alimentation en fluide (2).

21. Dispositif selon la revendication 20, **caractérisé en ce que** le circuit électrique de commande et de mesure (7) entreprend immédiatement, dès la commutation du contacteur d'entrée (13), une séquence de contrôle de présence de pistolet qui, en l'absence de pistolet d'alimentation (4), permet de recalibrer le circuit électrique de commande et de mesure (7).

22. Dispositif selon l'une des revendications 20 ou 21, **caractérisé en ce que**, si le contacteur d'entrée (13) reste commuté pendant une durée supérieure à un seuil déterminé, le système passe en mode "basse consommation" par arrêt de l'excitation du circuit électrique de commande et de mesure (7) ou espacement très important de son excitation.

23. Véhicule, **caractérisé en ce qu'**il comprend, au niveau de l'orifice d'entrée (2) de son réservoir de carburant, un dispositif selon l'une quelconque des revendications 1 à 22.

24. Véhicule selon la revendication 23, **caractérisé en ce que** l'orifice d'entrée (2) du réservoir de carburant est équipé d'une buse de guidage (9) pour guider la course du tube de pénétration (4b) du pistolet d'alimentation en carburant (4).

25. Véhicule selon la revendication 24, **caractérisé en ce que** la buse de guidage (9) comprend :
- un corps de buse annulaire (9a), raccordé de façon étanche selon une zone de raccordement annulaire (9b) en bout d'une conduite d'alimentation (3) du réservoir, et conformé pour recevoir et guider le tube de pénétration (4b) du pistolet d'alimentation en carburant (4),
- un tube de guidage (9c), prolongeant coaxialement le corps de buse (9a) dans la conduite d'alimentation (3) du réservoir, et également conformé pour recevoir et guider le tube de pénétration (4b) du pistolet d'alimentation en carburant (4),
- des moyens d'étanchéité (9d) entre le corps de buse (9a) et la carrosserie (10) adjacente du véhicule.

26. Véhicule selon la revendication 25, **caractérisé en ce que** la bobine primaire (6) est orientée coaxialement et surmoulée par une matière plastique dans ou sur la paroi du tube de guidage (9c), et est alimentée depuis le circuit électrique de commande et de mesure (7) par des conducteurs électriques (18) noyés dans la matière plastique dans ou sur la paroi du tube de guidage (9c) et qui sortent radialement de la buse de guidage (9) dans son tronçon situé entre la zone de raccordement annulaire (9b) et les moyens d'étanchéité (9d).

27. Véhicule selon la revendication 25, **caractérisé en ce que** la bobine primaire (6) est orientée coaxialement et engagée à l'intérieur du tube de guidage (9c) tout en laissant un espace suffisant pour le passage du tube de pénétration (4b) du pistolet d'alimentation (4) en carburant, et la bobine primaire (6) est alimentée depuis le circuit électrique de commande et de mesure (7) par l'intermédiaire d'une bobine réceptrice (19a), connectée en série avec la bobine primaire (6), logée en orientation radiale également à l'intérieur du tube de guidage (9c), et couplée magnétiquement à une bobine émettrice (19b) connectée au circuit électrique de commande et de mesure (7) et logée à l'extérieur de la conduite d'alimentation (3) en matière plastique, la bobine primaire (6) et la bobine réceptrice (19a) formant un ensemble tubulaire noyé dans une matière plastique.

28. Véhicule selon l'une quelconque des revendications 23 à 27, **caractérisé en ce qu'**il comprend des moyens de détection de présence de bouchon selon la revendication 7, et **en ce que** la séquence de contrôle de bouchon est activée lors du démarrage ou au début du roulage du véhicule, une alerte étant émise en cas d'absence de bouchon.

29. Véhicule selon l'une quelconque des revendications 23 à 28, **caractérisé en ce que** le circuit électrique de commande et de mesure (7) contient un programme enregistré ayant une séquence de contrôle de présence de pistolet, qui est activée lors de la mise du contact et/ou au démarrage du véhicule, et qui génère une alerte en cas de présence du pistolet.

30. Véhicule selon l'une quelconque des revendications 23 à 29, **caractérisé en ce qu'**il comprend une trappe d'accès avec contacteur d'entrée (13) selon la revendication 20, et **en ce que** le circuit électrique de commande et de mesure (7) est programmé pour émettre une alerte au démarrage du véhicule s'il est encore alimenté, la trappe étant restée ouverte.

31. Véhicule selon l'une quelconque des revendications 23 à 30, **caractérisé en ce qu'**il comprend une mémoire appropriée dans laquelle on enregistre les informations de présence de tube de pénétration (4b).

32. Dispositif selon l'une quelconque des revendications 8 à 19, **caractérisé en ce que** :
- il comprend une seconde bobine primaire (60), fixée à la réserve (1, 3) à proximité et en aval de la bobine primaire (6) pour être traversée par le tube de pénétration (4b),
- le circuit électrique de commande et de mesure (7) alimente la seconde bobine primaire (60) de la même manière que la bobine primaire (6),
- les moyens de détection (8) sont sensibles à la forme d'onde des courants ou tensions qui apparaissent dans la seconde bobine primaire (60) et permettent de distinguer la présence d'un pistolet d'alimentation en fluide (4),
- lorsque la seconde bobine primaire (60) détecte la présence du pistolet d'alimentation en fluide (4), les moyens de détection (8) valident la détection faite par la bobine primaire (6).
